(19) Europäisches Patentamt
European Patent Office
Office européen des brevets

(11) **EP 4 289 614 A1**

(12) **EUROPEAN PATENT APPLICATION**
published in accordance with Art. 153(4) EPC

(43) Date of publication:
**13.12.2023 Bulletin 2023/50**

(51) International Patent Classification (IPC):
**B32B 15/04** $^{(2006.01)}$       **B23K 31/12** $^{(2006.01)}$
**C22C 38/06** $^{(2006.01)}$

(21) Application number: **21923939.9**

(22) Date of filing: **17.03.2021**

(86) International application number:
**PCT/CN2021/081205**

(87) International publication number:
**WO 2022/165930 (11.08.2022 Gazette 2022/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.02.2021 CN 202110144974**

(71) Applicant: **Ironovation Materials Technology Co., Ltd.**
**Jiangsu 215000 (CN)**

(72) Inventors:
• **YI, Hongliang**
  **Shenyang, Liaoning 110819 (CN)**
• **CUI, Qingling**
  **Shenyang, Liaoning 110819 (CN)**
• **LI, Zhengxian**
  **Suzhou, Jiangsu 215000 (CN)**
• **LI, Shiyu**
  **Shenyang, Liaoning 110819 (CN)**
• **ZHOU, Shu**
  **Shanghai 201101 (CN)**
• **XIONG, Xiaochuan**
  **Suzhou, Jiangsu 215000 (CN)**
• **WANG, Guodong**
  **Shenyang, Liaoning 110819 (CN)**

(74) Representative: **Keil & Schaafhausen**
**Patentanwälte PartGmbB**
**Friedrichstraße 2-6**
**60323 Frankfurt am Main (DE)**

(54) **LASER TAILOR-WELDED PRE-PLATED STEEL PLATE AND HOT STAMPED MEMBER**

(57)    This application relates to the laser welding pre-coated steel plate and its hot-stamping forming parts, including a first pre-coated steel plate and a second pre-coated steel plate and a weld between the edges of the two. The composition of the weld in percentage of weight such that the austenitizing temperature $A_{e3}$ of the weld in equilibrium state meets: $A_{e3}=898-30\times C_{Mn\text{-}weld}-231\times C_{C\text{-}weld}+58\times C_{Al\text{-}weld}^2+37$ $\times C_{Al\text{-}weld}\leq820$. The invention controls the composition of the weld by controlling the composition and thickness of the matrix steel plate and the thickness of its pre-coating, so that no additional auxiliary means are required during laser welding. The weld of hot-stamping formed members made of laser-welded pre-coated steel plates has improved performance and increased collision safety.

FIG. 1

Processed by Luminess, 75001 PARIS (FR)

**Description**

**Technical Field**

The present invention relates to a laser tailor-welded pre-coated steel plate with aluminum or aluminum alloy pre-coating and its hot stamping forming components.

**Background**

The automobile lightweight and safety have become urgent problems to be solved with the urgent need of energy conservation and the improvement of automobile safety requirements in automobile manufacturing industry. In order to solve these two problems, technicians pay more attention to ultra-high strength steel, especially pre-coated steel plate with aluminum or aluminum alloy pre-coating for hot stamping which has obvious advantages in collision resistance and has become the development direction to ensure safety and reduce weight.

In automobile manufacturing, laser tailor-welded blanks can be welded by sheets with different thicknesses, different materials and even different surface states. This method can optimize the cost, weight and safety performance by placing the propriety materials in the required positions of the parts. However, for commonly used hot stamping steels with Al-Si coating, the Al-Si pre-coating of the initial steel plate adversely affects the performance of the weld because the Al-Si pre-coating will melt into the weld during the laser tailor-welded process. The distribution of aluminum content in the obtained weld will lead to the following two problems:

i) The intermetallic compound with high brittleness will be formed in the area with relatively high aluminum content after hot stamping. It is easy to induce cracks and accelerate the failure of the weld in components;

ii) Ferrite will be formed in the region with relatively low aluminum content, so that the weld can not be completely austenitized during the hot stamping process, and then the dual-phase microstructure of martensite and ferrite were found in weld after hot stamping. The different mechanical strength areas will be formed in the weld, affecting the mechanical properties of the weld.

In order to solve the technical problems mentioned in above, CN101426612A discloses a method for manufacturing a welded part having good mechanical properties from a rolled coated sheet, wherein the sheet is composed of a steel plate substrate and an aluminum alloy or aluminum-based pre-plated layer consisting of an Al-Si metal alloy layer and an intermetallic compound layer containing $Fe_2Al_3$, $Fe_2Al_5$ and $Fe_xAl_ySi_z$. The intermetallic compound layer is 3 to 10 $\mu$m, and the aluminium alloy layer can be 20 $\mu$m. On the one hand, the patent reported that the pre-plated Al-Si metal alloy layers on the upper and lower sides are removed by a laser beam pointing to prevent the formation of intermetallic combination areas in the weld. On the other hand, it is important to retain the intermetallic compound layer, which prevents oxidation and decarburization of the steel plate substrate during subsequent heating stage, thereby obtaining a welded joint with excellent ductility and corrosion resistance after heat treatment.

However, in practice, it is found that this patent fails to completely solve the second problem mentioned above. For this reason, CN103917329A further proposes to use filler wires in laser tailor welding after removing aluminium alloy layers, wherein the filler wires contain the following elements expressed in weight percent: $0.6\% \leq C \leq 1.5\%$, $1\% \leq Mn \leq 4\%$, $0.1\% \leq Si \leq 0.6\%$, $Cr \leq 2\%$, $Ti \leq 0.2\%$, and the remainder is iron and inevitable impurities. The ratio between the carbon content of the weld metal area and the maximum carbon content of the base steel plate is 1.27 to 1.59. The hardness of the weld is increased, and the welded component with certain mechanical strength is obtained.

However, accurately removing the outer aluminum alloy layers in both CN101426612A and CN103917329A poses a significant challenge. Furthermore, it is widely recognized that although a higher carbon content can enhance hardness, it also leads to a reduction in weld toughness. Considering the collision safety of components and the fatigue performance of welds, increasing the carbon content in welds is not a desirable approach. In the case of hot stamping forming steel with Al-Si pre-coating, CN101104225A and CN106687248A have proposed a technical solution for direct welding without the need to remove the aluminum alloy layer on the outer side of the pre-coating prior to welding.

CN101104225A proposes the utilization of a combined approach involving laser welding and a tungsten inert gas shielded welding torch to increase the size of the melting zone. This technique aims to reduce the aluminum proportion within the melting zone by augmenting the quantity of molten matrix steel plate and achieving homogenization of the melting zone. Consequently, the local aluminum content exceeding 1.2% can be eliminated, thereby preventing any hindrance to the austenite transformation of the matrix steel plate. Additionally, the patent suggests the application of a combination of laser-inert gas metal arc welding and active gas arc welding. In this case, a consumable electrode wire consisting of elements that induce the $\gamma$-phase, such as manganese, nickel, copper, etc., is employed to counteract the $\alpha$-phase inducing effect of aluminum, thus ensuring the austenite transformation throughout the entire melting zone.

Similarly, CN106687248A proposes the incorporation of an alloy powder material into the molten pool during laser tailor welding of pre-coated metal plates. This alloy powder material, primarily composed of nickel, serves to partially offset the detrimental effects of aluminum originating from the pre-coated layer. Moreover, chromium is included in the alloy powder to enhance the performance of welded joints, resulting in improved hardenability, impact strength, fatigue resistance, and higher notch toughness.

Although these two patents eliminate the need for pre-coated aluminum alloy layer removal, they either rely on a complex combination of laser welding torch or introduce additional elements to address the issue. Apart from laser employment, these patents necessitate supplementary measures to overcome the challenges arising from the fusion of the pre-coated layer into the weld.

The inventor of the present study made an intriguing observation that the laser tailor-welded pre-coated steel plate, as produced by this invention, does not exhibit the aforementioned brittleness issue. Notably, the welds demonstrate uniform mechanical strength after undergoing the hot stamping process without any supplementary auxiliary means. This implies that there is no requirement to strip off the pre-coated layer in advance or employ filler wire or alloy powder material.

## Summary of the Invention

The present invention introduces a laser tailor-welded pre-coated steel plate, which consists of a first pre-coated steel plate, a second pre-coated steel plate, and a weld connecting their edges;

the first pre-coated steel plate consists of a first base steel plate with an aluminum or aluminum alloy pre-coated layer on both upper and lower surfaces, the first base steel plate has a carbon content ($C_{C-A}$) ranging from 0.08 wt% to 0.45 wt%, preferably 0.18 wt% to 0.45 wt%, additionally, the manganese content ($C_{Mn-A}$) falls within the range of 1.70 wt% to 3.50 wt%, while the aluminum content ($C_{A1-A}$) is between 0.010 wt% and 1.000 wt%, preferably 0.010 wt% to 0.700 wt%, and more preferably 0.010 wt% to 0.100 wt%, the thickness ($t_{0A}$) of the first pre-coated steel plate ranges from 0.7 mm to 3.0 mm;
the second pre-coated steel plate consists of a second base steel plate with an aluminum or aluminum alloy pre-coated layer on both upper and lower surfaces, the second base steel plate has a carbon content ($C_{C-B}$) ranging from 0.08 wt% to 0.45 wt%, preferably 0.18 wt% to 0.45 wt%, additionally, the manganese content ($C_{Mn-B}$) falls within the range of 1.70 wt% to 3.50 wt%, while the aluminum content ($C_{A1-B}$) is between 0.010 wt% and 1.000 wt%, preferably 0.010 wt% to 0.700 wt%, and more preferably 0.010 wt% to 0.100 wt%, the thickness ($t_{0B}$) of the second pre-coated steel plate ranges from 0.7 mm to 3.0 mm;
the one-sided pre-coating layer on the upper and lower surfaces of the first pre-coated steel plate and the second pre-coated steel plate comprises: an intermetallic compound layer proximate to the first or second base steel plate; and an Al alloy layer outside the intermetallic compound layer, the thickness of the Al alloy layer being not less than 40% of the thickness of the one-sided pre-coated layer and the thickness of the one-sided pre-coated layer being 8 μm to 18 μm, such that the total thickness $t_{1A}$ of the pre-coated layer on the first pre-coated steel plate is 16 μm to 36 μm and the total thickness $t_{1B}$ of the pre-coated layer on the second pre-coated steel plate is 16 μm to 36 μm; wherein the composition of the weld seam in weight percent is such that the full austenitizing temperature $A_{e3}$ of the weld seam in equilibrium state satisfies:

$$A_{e3}=898-30\times C_{Mn-weld}-231\times C_{C-weld+58}\times C_{Al-weld}{}^2+37\times C_{Al-weld}\leq 820；（Equation 1）$$

$$C_{Mn-weld}=（t_{0A}\times C_{Mn-A}+t_{0B}\times C_{Mn-B}）\div（t_{0A}+t_{0B}）；（Equation 2）$$

$$C_{C-weld}=（t_{0A}\times C_{C-A}+t_{0B}\times C_{C-B}）\div（t_{0A}+t_{0B}）；（Equation 3）$$

$$C_{Al-weld}=C_{Al-weld-base}+C_{Al-weld-coat}；（Equation 4）$$

$$C_{Al-weld-base}=（t_{0A}\times C_{Al-A}+t_{0B}\times C_{Al-B}）\div（t_{0A}+t_{0B}）；（Equation 5）$$

$$C_{Al\text{-weld-coat}}=[\ (t_{1A}+t_{1B})\ \times0.7\times2.7]\div[\ (t_{0A}+t_{0B})\ \times7.8+\ (t_{1A}+t_{1B})\ \times0.7\times2.7)\ ]\times100;$$

$$（Equation\ 6）$$

among them,

$C_{Mn\text{-weld}}$ is the content of Mn in the weld,
$C_{C\text{-weld}}$ is the content of C in the weld,
$C_{Al\text{-wel}}$ is the content of Al in the weld,
$C_{Al\text{-weld-base}}$ is the content of Al in the weld from the base plate,
$C_{Al\text{-weld-coat}}$ is the content of Al in the weld from the pre-coated layer.

In one aspect, the present application introduces a thin one-sided pre-coated layer with a thickness ranging from 8 $\mu$m to 18 $\mu$m. The use of this sheet with thin pre-coated layer results in a reduction of the aluminum content introduced into the weld during the melting of the pre-coated layer. This reduction is equivalent to the process of removing the thick Al-Si metal alloy layer by replacing it with the thin plating layer. Consequently, the possibility of local aluminum accumulation, characterized by high local aluminum content, and the formation of intermetallic combination areas in the weld seam is eliminated.

Moreover, the present application establishes specific limitations on the relationship between the carbon (C) content, aluminum (Al) content, and manganese (Mn) content in the weld to achieve the desired austenitizing temperature. It is important to note that when a pre-coated layer is present, the aluminum will inevitably melt into the weld during laser welding. Different metallic and nonmetallic elements have varying effects on the austenitizing temperature $A_{e3}$, with aluminum acting as a strong ferrite stabilizing element. Consequently, an increase in the aluminum content raises the austenitizing temperature of the weld in the subsequent hot stamping process, resulting in a dual-phase structure of ferrite and martensite. In contrast, manganese and carbon are austenitic stabilizing elements, and increasing their respective contents can lower the $A_{e3}$. Therefore, the present invention proposes to control the $A_{e3}$ of the weld by carefully designing the relationship between the aluminum content (derived from both the pre-coated layer and the base steel plate), manganese content, and carbon content (from the base steel plate) in the weld. This ensures that the weld achieves maximum austenitization during the hot stamping process, thereby minimizing the presence of ferrite. Given that the alloy elements in the weld originate from both the pre-plating layer and the base steel plate, the limitation on the composition relationship of the weld can be considered equivalent to the restriction on the relevant parameters of the pre-plating layer and the base steel plate.

On this basis, in order to obtain parts with desired shape and properties and ensure the stability of parts production, it is necessary to make the complete austenitizing temperature $A_{e3} \leq 820°C$. Only in this way can ensure the less ferrite in the weld, so that the weld strength will not decrease.

The average Al content coefficient of the pre-coated layer is expressed in the $C_{Al\text{-weld-coat}}$ equation (Equation 6). The reason why the average Al content coefficient of the pre-coated layer is 0.7 is as follows: considering that the Al content of the metal alloy layer is generally greater than 83wt%, and the thickness of the metal alloy layer is not less than 40% of the pre-coated layer thickness, while the Al content of the intermetallic compound layer is generally more than 30wt%, the aluminum content of the pre-coated layer should not be less than 50wt%. Because the thickness of metal alloy layer and intermetallic compound layer in the pre-coated layer obtained by different processes is varied, the aluminum content of the pre-coated layer will change between 50wt% and 80wt%, so the average aluminum content coefficient of the pre-coated layer is taken as an intermediate value of 0.7.

According to the obtained equation, the corresponding pre-coating structure can be selected when the content of C, Mn and Al in the substrate steel plate is known, or the appropriate composition of the foundation steel plate can be selected when the pre-coating structure is known, so that the strength and toughness of the weld obtained by laser tailor-welding have good performance, but other means are not needed in the laser tailor-welding process.

Preferably $A_{e3} \leq 800$. By controlling the relationship among Al, Mn and C, the complete austenitizing temperature can be further decreased. The existence of ferrite can be further reduced, thus further improving the performance of the weld.

Preferably, the aluminum content of the weld should satisfy: $C_{Al\text{-weld}} \leq 1.2$ wt%. Excessive aluminum content will lead to the formation of $\delta$-ferrite in the weld. Once $\delta$-ferrite is produced, it will not be eliminated by heat treatment process, which will adversely affect the performance of the weld. Further preferably, $C_{Al\text{-weld}}$ is less than or equal to 1.0 wt% to further reduce ferrite generation.

In addition, because the laser tailor-welded process is very intense, and the uniformity of aluminum in the weld can not be controlled under the action of gravity and fluid stress, even if the weld designed according to the equation may still have a small amount of ferrite after hot stamping. The appearance of ferrite will reduce the hardness of the weld, and correspondingly lead to the decrease of the weld strength, which makes the weld strength lower than that of the pre-coated steel plates on both sides. Therefore, in the tensile process, the plastic deformation occurs in the low-strength weld area first, which leads to the elongation of the weld and the shrinkage of the cross-sectional size. The shrinkage of the cross-section leads to stress and strain concentration until fracture. In contrast, during this process, the pre-coated plates on both sides of the weld have not experienced tensile forces that can deform them. Therefore, compared with the pre-coated plate without weld, the strength and elongation of the sample decrease greatly due to the existence of weld. If there is no ferrite in the weld, that is, the weld has the same strength as the pre-coated plate, the weld and the pre-coated plate will deform together and bear the same stress during the whole tensile process, so that the weld has the same performance as the pre-coated plate. If there is less ferrite in the weld, the strength of the weld will be slightly lower than that of the pre-coated plate. During the tensile test process, although the weld will deform first, the first deformed weld undergoes work hardening. Therefore, although the section size of the weld shrinks, the overall tension that it can bear is improved, even the same as that of the pre-coated plate. In this case, the whole specimen bears the force and undergoes plastic deformation, so that the tensile strength and elongation of the specimen with laser weld are basically equivalent to those of the pre-coated plate. The inventors discovered that in order to ensure the strength of the weld, the ferrite content in the weld after hot stamping should be less than 3% by volume.

The total elongation of the laser tailor-welded pre-coated plate after hot stamping forming is not less than 4%, and the tensile strength is not less than 90% of the lower strength of the first pre-coated plate and the second pre-coated plate.

The invention controls the composition of the weld by controlling the composition and thickness of the base steel plate and the thickness of the pre-coated layer, thereby basically eliminating the technical problems caused by the melting of Al in the pre-coated layer into the weld during laser welding. There is no need to use additional auxiliary means to solve these problems during laser welding, making the laser tailor-welding process easy to operate and reducing the cost. Hot stamping formed components obtained from laser tailor-welded pre-coated sheets can be used as motor vehicle structures or safety components with improved crash safety.

## Brief Description of the Drawings

Fig. 1 schematically shows laser tailor-welded pre-coated sheet;
Fig. 2 shows one-side pre-coating layer of sample 1;
Fig. 3 shows one-sided pre-coating of sample 2;
Fig. 4 shows one-sided pre-coatingof sample 3;
Fig. 5 shows one-sided pre-coating of sample 4;
Fig. 6 shows one-side pre-coating layer of sample 5;
Fig. 7 shows one-side pre-coating layer of sample 6;
Fig. 8 shows one-side pre-coating layer of sample 7;
Fig. 9 shows one-sided pre-coating of sample 8;
Fig. 10 shows one-side pre-coating layer of a sample 9;
Fig. 11 shows one-side pre-coating layer of a sample 10;
Fig. 12 shows one-side pre-coating layer of sample 11;
Fig. 13 shows one-side pre-coating layer of sample 12;
Fig. 14 shows one-side pre-coating layer of a sample 13;
Fig. 15 shows the mechanical properties of specimens 1 to 13 after hot stamping;
Fig. 16 shows the mechanical properties of welds after hot stamping according to embodiments and comparative examples of the present invention;
Fig. 17A shows the microstructure of weld after hot stamping according to Embodiment 4 of the present invention;
Fig. 17B shows the microstructure of weld of comparative example 3 after hot stamping;
Fig. 18 shows the effect of C content on $A_{e3}$;
Fig. 19 shows the effect of Mn content on $A_{e3}$;
Fig. 20 shows the effect of Al content on $A_{e3}$.

## Detailed Description of the Invention

The present invention will be described in more detail below with exemplary embodiments. The following embodiments or experimental data are intended to be illustrative of the invention and it should be apparent to those skilled in the art that the invention is not limited to these embodiments or experimental data. In addition, the description of chemical element content in this paper refers to weight percentage.

The main chemical composition of the base steel plate used in the present invention is described in detail as follows:

C: About 0.08 wt% to 0.45 wt%,

C is the most effective solution strengthening element in steel. In order to ensure the tensile strength of steel above 1000MPa, the carbon content needs to be greater than or equal to about 0.08 wt%. The microstructure of base metal is mainly brittle high carbon martensite when the carbon content exceeds 0.45 wt%. The high carbon martensite with poor toughness would decreases the hydrogen embrittlement resistance significantly. Therefore, the C content of the high strength steel used in the present invention is between about 0.08 and 0.45 wt%. Preferably, the C content is between 0.18 wt% and 0.45 wt%, and the tensile strength of the steel can be guaranteed to reach more than 1400MPa.

Mn: about 1.70 wt% ~ 3.50 wt%,

Mn is an element that improves the hardenability of steel to ensure its strength. In order to ensure the hardenability of steel, the Mn content of hot stamping steel is usually about 1.2 wt%. The invention can reduce the complete austenitizing temperature by considering the Mn element, and the Mn content is designed to be more than 1.7 wt%. On the other hand, high Mn content will lead to serious segregation in the continuous casting process, and high hardenability of hot rolled plate will lead to the failure of subsequent cold rolling treatment. Therefore, the present invention requires that the Mn content of the high strength steel used does not exceed 3.50 wt%.

Al: About 0.010 wt% ~ 1.000 wt%,

In order to ensure the deoxidization effect, the content of Al is required to be above about 0.010 wt% as aluminum is a strong deoxidizer. In addition, when the content of B is greater than 0.0005 wt%, in order to prevent the generation of BN and ensure the improvement of hardenability of B, an appropriate amount of Al can be added to combine it with N as the strong binding force between Al and N. However, it should be noted the Al content should not be too high as the Al will increase the $A_{e3}$ of steel. Therefore, the Al content is limited to about 0.010 wt% to 1.000 wt%, preferably 0.010 wt% to 0.700 wt%, further preferably 0.010 wt% to 0.100 wt%.

Among other alloying elements, proper amount of Si can play the role of solution strengthening and improve the strength of matrix steel plate, proper amount of B, Cr, Mo, Ni and other elements can ensure the hardenability of steel, and proper amount of Nb, Ti and V can form dispersed carbides in steel matrix to improve the strength and toughness.

As an example, a base plate with the composition shown in Table 1 was prepared by the following manufacturing process:

A) Steelmaking: smelting by vacuum induction furnace, electric furnace or converter according to the composition in Table 1, using continuous casting technology to produce slab, or directly adopting thin slab continuous casting and continuous rolling process;

b) Hot rolling: heating the billet to 1120-1280°C for hot rolling, the total reduction of hot rolling is above 50%, and the final rolling temperature is above 800 °C to obtain a hot rolled plate, which is crimped below 700 °C to form a hot rolled steel coil, and pickling the hot rolled coil to remove oxide scale generated in the hot rolling process; And

c) Cold rolling: Cold rolling the hot rolled coil after pickling, the cold rolling reduction is 30% ~ 70%, and cold rolled coils with different thicknesses are obtained.

Table 1 Chemical composition of base steel plate (wt%, allowance Fe and other unavoidable impurity elements)

| Plate | C | Si | Mn | B | Al | Cr | Mo | Ni | Nb | Ti | V |
|---|---|---|---|---|---|---|---|---|---|---|---|
| Matrix1 | 0.22 | 0.21 | 1.81 | 0.0020 | 0.010 | 0.10 | 0.02 | 0.02 | 0.020 | 0.04 | / |
| Matrix 2 | 0.23 | 0.20 | 1.83 | 0.0010 | 0.012 | 0.14 | 0.04 | 0.03 | 0.010 | 0.05 | / |
| Matrix 3 | 0.22 | 0.23 | 3.25 | 0.0014 | 0.015 | 0.10 | 0.02 | 0.07 | 0.008 | 0.02 | / |
| Matrix 4 | 0.23 | 0.22 | 3.20 | 0.0023 | 0.013 | 0.18 | 0.13 | 0.01 | 0.003 | 0.02 | / |
| Matrix 5 | 0.33 | 0.55 | 1.82 | 0.0026 | 0.013 | 0.10 | 0.01 | 0.04 | 0.015 | 0.04 | 0.12 |
| Matrix 6 | 0.34 | 0.23 | 3.20 | 0.0030 | 0.600 | 0.13 | 0.12 | 0.01 | 0.030 | 0.001 | 0.15 |

(continued)

| Plate | C | Si | Mn | B | Al | Cr | Mo | Ni | Nb | Ti | V |
|---|---|---|---|---|---|---|---|---|---|---|---|
| Matrix 7 | 0.21 | 0.20 | 1.79 | 0.0020 | 0.012 | 0.21 | 0.14 | 0.02 | 0.002 | 0.04 | / |
| Matrix 8 | 0.21 | 0.22 | 1.80 | 0.0015 | 0.011 | 0.07 | 0.08 | 0.02 | 0.001 | 0.02 | / |
| Matrix 9 | 0.23 | 0.20 | 1.81 | 0.0025 | 0.010 | 0. 21 | 0.01 | 0.01 | 0.001 | 0.04 | / |
| Matrix 10 | 0.22 | 0.21 | 3.10 | 0.0018 | 0.015 | 0.13 | 0.01 | 0.01 | 0.021 | 0.03 | / |
| Matrix 11 | 0.21 | 0.20 | 1.40 | 0.0015 | 0.010 | 0.12 | 0.01 | 0.03 | 0.012 | 0.03 | / |
| Matrix 12 | 0.21 | 0.22 | 1.60 | 0.0020 | 0.016 | 0.12 | 0.05 | 0.02 | 0.017 | 0.05 | / |
| Matrix 13 | 0.33 | 0.28 | 1.80 | 0.0026 | 0.610 | 0.17 | 0.03 | 0.02 | 0.011 | 0.004 | 0.12 |

The obtained cold-rolled steel coil is pre-coated after continuous annealing treatment, wherein the plating solution contains 7-12wt% Si, less than 4wt% Fe by weight, the balance is Al or Al alloy and inevitable impurities. The plating solution temperature is 650°C-700°C, the predetermined temperature of the steel plate entering the plating solution (i.e., the temperature of the steel plate entering the pot) is 640°C, and the hot dip plating time is 2s-7s. The excess plating solution on the surface is removed by air knife purging to control the different thickness of one-side pre-coating layer on each surface. In order to prevent the single-layer structure after hot stamping caused by too thin one-side pre-coating layer from adversely affecting the performance of parts, the thickness of one-side pre-coating layer is controlled to be no less than 8 $\mu$m.

Table 2 Related parameters of the base steel plate and its unilateral precoating

| Sample | Plate | Plate thickness, mm | Single-side pre-coating thickness, $\mu$m | Al alloy layer thickness, $\mu$m | Total thickness of precoating, $\mu$m | Tensile strength, MPa |
|---|---|---|---|---|---|---|
| Sample 1 | Matrix1 | 1.4 | 8.47 | 3.49 | 16.94 | 1527 |
| Sample 2 | Matrix 2 | 1.4 | 12.38 | 6.58 | 24.76 | 1543 |
| Sample 3 | Matrix 3 | 0.8 | 12.36 | 6.40 | 24.72 | 1568 |
| Sample 4 | Matrix 4 | 1.0 | 16.23 | 9.66 | 32.46 | 1564 |
| Sample 5 | Matrix 5 | 1.4 | 10.42 | 6.77 | 20.84 | 1924 |
| Sample 6 | Matrix 6 | 1.4 | 10.25 | 5.50 | 20.50 | 1924 |
| Sample 7 | Matrix 7 | 0.7 | 8.93 | 4.07 | 17.86 | 1568 |
| Sample 8 | Matrix 8 | 0.8 | 12.25 | 5.91 | 24.50 | 1557 |
| Sample 9 | Matrix 9 | 1.0 | 15.95 | 7.65 | 31.90 | 1539 |
| Sample 10 | Matrix 10 | 1.4 | 32.92 | 24.33 | 65.84 | 1541 |
| Sample 11 | Matrix 11 | 1.4 | 8.80 | 4.81 | 17.60 | 1517 |
| Sample 12 | Matrix 12 | 1.4 | 13.77 | 6.46 | 27.54 | 1519 |

(continued)

| Sample | Plate | Plate thickness, mm | Single-side pre-coating thickness, $\mu$m | Al alloy layer thickness, $\mu$m | Total thickness of precoating, $\mu$m | Tensile strength, MPa |
|---|---|---|---|---|---|---|
| Sample 13 | Matrix 13 | 1.4 | 10.20 | 6.13 | 20.40 | 1947 |

Two pre-coated plates were welded by laser. The welding parameters were as follows: welding power was 3kW, welding speed was 0.078 m/s, defocus was 0, and energy density was 38J.

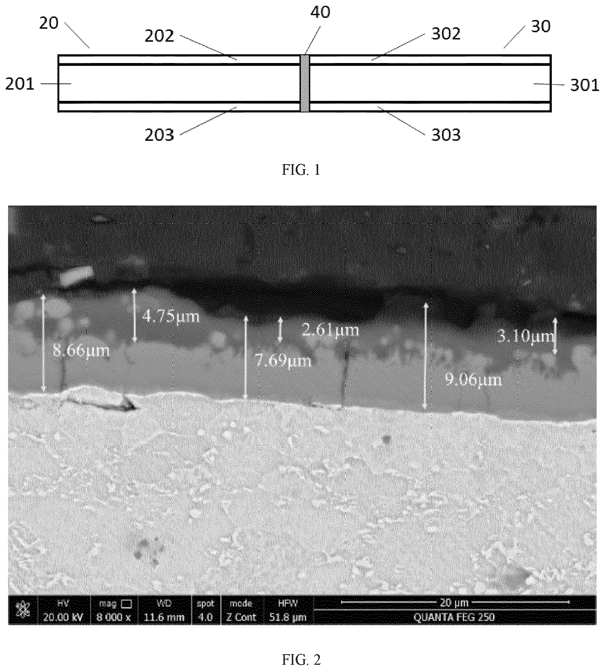

Fig. 1 schematically shows a laser tailor-welded pre-coated sheet comprising a first pre-coated sheet 20, a second pre-coated sheet 30 and a weld seam 40 located between their edges. The upper and lower surfaces of the base plate 201 of the first pre-coated plate 20 have the first one-sided pre-coating 202 and the second one-sided pre-coating 203, respectively. The upper and lower surfaces of the base plate 301 of the second pre-coated steel plate 30 have one-sided pre-coating the third one-sided pre-coating 302 and the forth one-sided pre-coating 303, respectively.

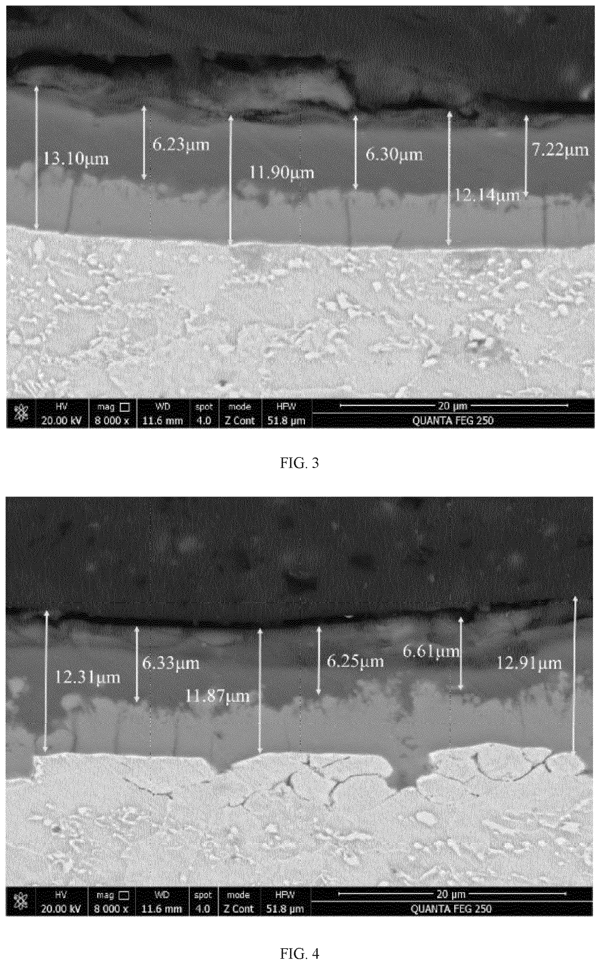

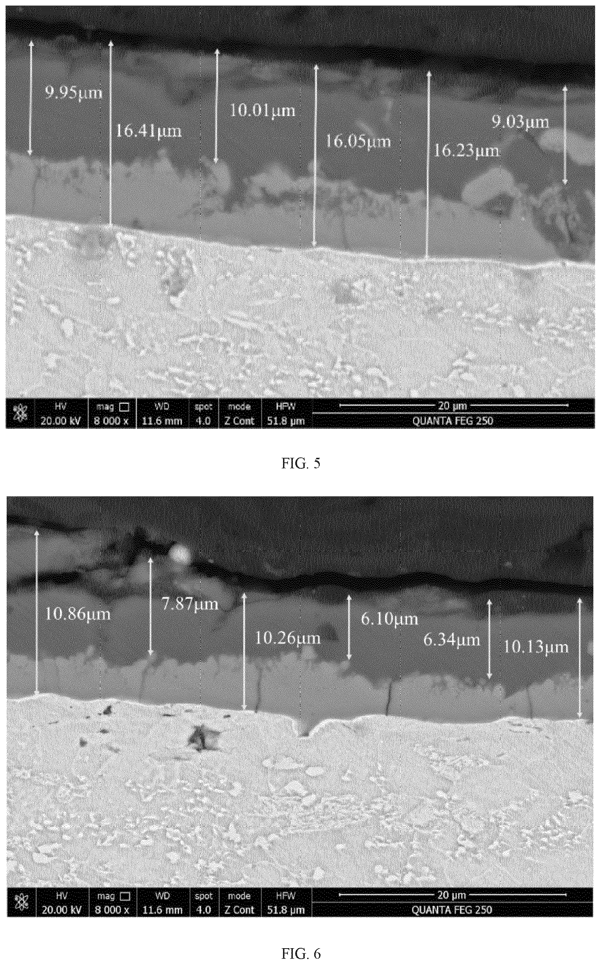

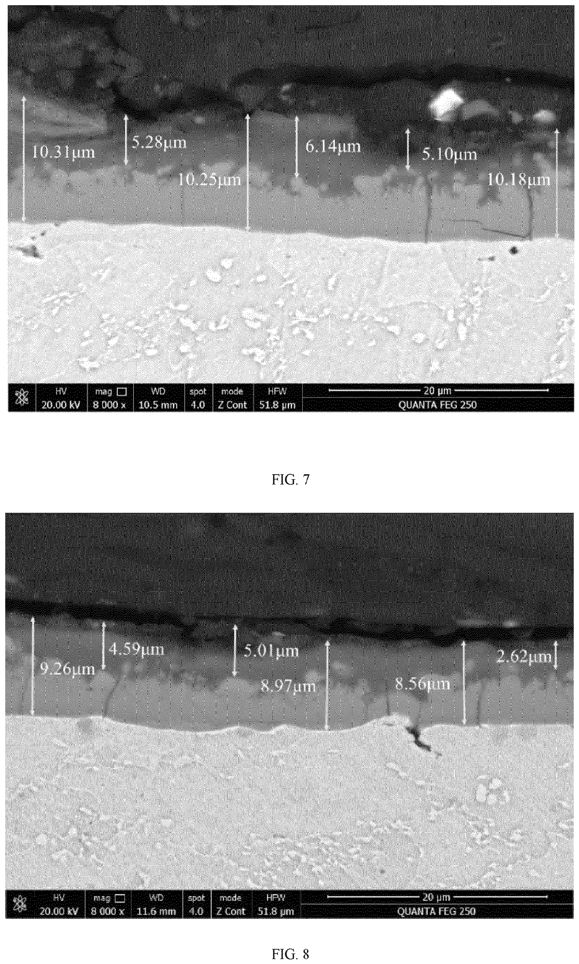

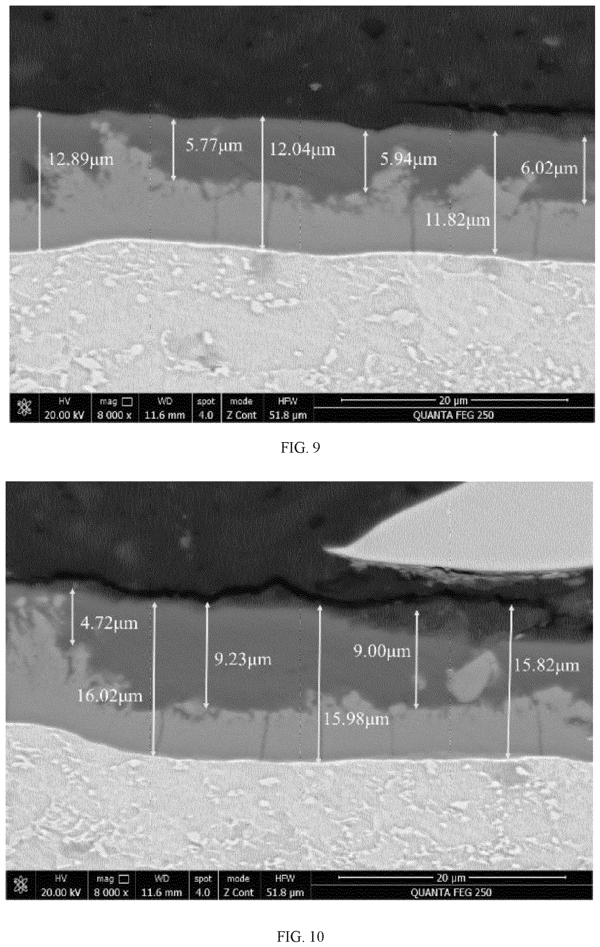

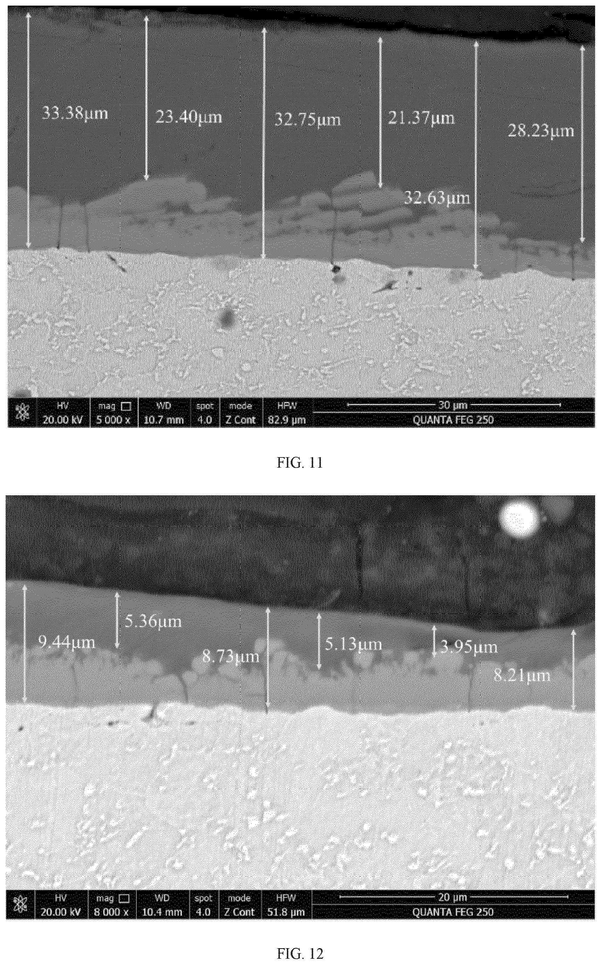

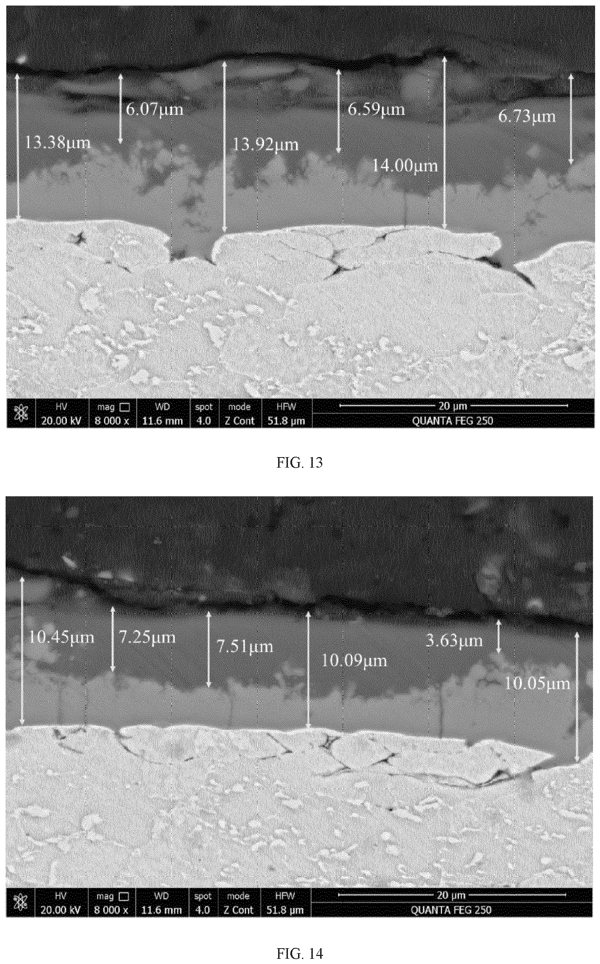

Figs. 2-14 respectively show the microstructure of the single-side pre-coating layer of each sample, in which the thickness of the single-side pre-coating layer and the thickness of the Al alloy layer are obtained by averaging the thickness of the single-side pre-coating layer after multiple measurements and are listed in Table 2.

The laser tailor-welded pre-coated sheet can be hot stamped according to the conventional hot stamping process in the art. In this embodiment, a flat hot stamping simulation is carried out on the laser tailor-welded pre-coated plates, and the hot stamping process is as follows:

1) The laser tailor-welded pre-coated plate is heated to 900°C for 300s, then cooled above 700 °C for hot stamping, the pressure is 400t and the holding time is 10s, and cooled below 100 °C in the die and taken out;

2) In order to simulate the actual use of automobile parts, the cooled plates were put into a tempering furnace at 170 °C for 20min to simulate the coating and baking process of the parts, and then it is taken out and cooled to room temperature.

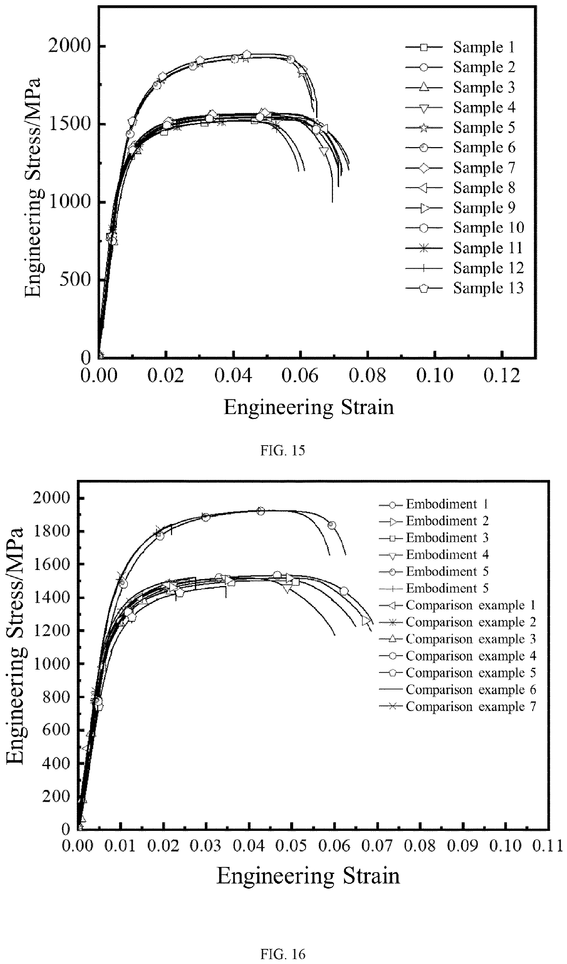

According to ASTM E8/E8M-09 Standard Method for Tensile Test of Metallic Materials, the hot stamping formed components obtained by laser tailor-welded pre-coated plates are made into tensile samples, so that the weld seam is located in the middle of the tensile samples. Fig. 15 shows the mechanical properties of each sample after hot stamping, and the specific data are shown in Table 2. Accordingly, Fig. 16 shows the mechanical properties of each embodiment and comparative example after hot stamping, and the specific data are shown in Table 3. In addition, the area method is used to calculate the ferrite content in the weld after hot stamping, and the specific results are shown in Table 3.

Table 3 Mechanical properties of hot-stamping components, ferrite content in the weld and related calculation values

| | Welding relation | Elongation , % | Tensile strength , MPa | Ferrite content in weld after hot stamping, wt% | Al content calculated according to equation 6, wt% | Ae3 calculated according to equation 1 |
|---|---|---|---|---|---|---|
| Embodiment 1 | Sample1/ Sample 1 | 6.9 | 1532 | 1.0 | 0.30 | 809 |
| Embodiment 2 | Sample 2/ Sample 2 | 6.7 | 1512 | 2.5 | 0.44 | 817 |
| Embodiment 3 | Sample 3/ Sample 3 | 6.5 | 1502 | 0.9 | 0.76 | 811 |
| Embodiment 4 | Sample 4/ Sample 4 | 6.0 | 1518 | 1.2 | 0.79 | 815 |
| Embodiment 5 | Sample 5/ Sample 5 | 6.3 | 1923 | 0.3 | 0.37 | 789 |
| Embodiment 6 | Sample 6/ Sample 6 | 5.9 | 1923 | 1.9 | 0.95 | 811 |

(continued)

| | Welding relation | Elongation, % | Tensile strength, MPa | Ferrite content in weld after hot stamping, wt% | Al content calculated according to equation 6, wt% | Ae3 calculated according to equation 1 |
|---|---|---|---|---|---|---|
| Comparison example 1 | Sample 7/ Sample 7 | 2.7 | 1510 | 6.3 | 0.63 | 841 |
| Comparison example 2 | Sample 8/ Sample 8 | 1.7 | 1443 | 8.7 | 0.75 | 856 |
| Comparison example 3 | Sample 9/ Sample 9 | 2.3 | 1440 | 9.2 | 0.78 | 854 |
| Comparison example 4 | Sample 10/ Sample 10 | 1.2 | 1330 | 10.0 | 1.14 | 872 |
| Comparison example 5 | Sample 11/ Sample 11 | 3.5 | 1460 | 3.7 | 0.31 | 825 |
| Comparison example 6 | Sample 12/ Sample 12 | 2.7 | 1513 | 4.2 | 0.49 | 831 |
| Comparison example 7 | Sample 13/ Sample 13 | 2.3 | 1841 | 8.3 | 0.96 | 857 |

According to Tables 1, 2 and 3, it can be seen that the composition, thickness and pre-coating thickness of the substrate plates involved in the comparative examples and examples are different, so the measured mechanical properties of each sample after laser tailor-welded process and hot stamping process are also different. Generally the welds of examples 1 to 6 have less ferrite and express good mechanical properties. In contrast, the welds of comparative examples 1 to 7 had larger ferrite content and significantly deteriorated mechanical properties. Through detailed analysis of the data, the inventor found that the total thickness of the pre-coating layer, the thickness of the substrate plate, the Mn content, the C content and the Al content can all directly affect the final performance of the weld.

First, the total thickness of the pre-coated layer reflects the aluminum content that can be introduced into the weld, so it can significantly affect the austenitizing temperature of the weld. For example, comparative example 4 with ferrite (10.0 wt%) express the lower tensile strength (1330MPa) compared with example 2. This is because the total thickness of the pre-coating layer of Comparative Example 4 (where the thickness of the one-side pre-coating layer is 32.92 $\mu$m, within the thickness range of the conventional one-side pre-coating layer in the art) is significantly larger than the total thickness of the pre-coating layer of Example 2 (where the thickness of the one-side preplating layer is 12.38 $\mu$m) though the example 2 and comparative example 4 have similar carbon content, aluminum content and thickness of the base steel sheet. As a result, the aluminum content in the weld of Comparative Example 4 is higher than that of the weld of Example 2. The same is true of the calculation result according to Equation 6. The aluminum content of the weld of Comparative Example 4 is 1.14 wt%, which is higher than the aluminum content of the weld of Example 2 by 0.44 wt%. This results in a significant increase in the austenitizing temperature $A_{e3}$ of the weld (in which example 2: 817°C and comparative example 4: 872°C.), so that the austenitizing degree of the weld of comparative example 4 in the subsequent hot stamping process is significantly less than that of example 2, and therefore the ferrite content in the weld obtained by comparative example 4 is significantly higher. In addition, the thicker pre-coating of Comparative Example 4 causes brittle intermetallic compounds in the weld, which also degrades the weld performance.

Further, compared with example 2, example 1 has a thinner total thickness of the pre-coating layer (wherein, the thickness of the one-side pre-coating layer is 8.47$\mu$m), so that the Al content of the weld is further reduced to 0.30 wt% and the austenitizing temperature $A_{e3}$ is reduced to 809 °C. The ferrite content in the weld obtained after hot stamping is only 1.0 wt%, and the tensile strength is increased to 1532MPa and the elongation is increased to 6.9%.

From the above data, it can be seen that by thinning the total thickness of pre-coating layer (correspondingly, the thickness of pre-coating layer on one side), not only can the austenitizing temperature $A_{e3}$ of weld be reduced, so as to obtain weld with low ferrite content, but also the formation of brittle intermetallic compounds can be eliminated, thus improving the strength of weld.

Secondly, the thickness of the base plate is also one of the important factors to be considered. Comparing Example 1 and Comparative Example 1, it can be seen that although both have similar pre-coating thickness and carbon content, manganese content and aluminum content of the base steel plate, since the thickness of the base plate of Example 1 (1.4 mm) is twice that of the base plate of Comparative Example 1 (0.7 mm), the aluminum content of the weld of Comparative Example 1 is higher than that of the weld of Example 1, resulting in an increase in the austenitizing temperature of the weld. The same is true of the calculation results according to Equations 6 and 1. The aluminum content of the weld of Comparative Example 1 is 0.63 wt%, which is higher than the aluminum content of the weld of Example 1 by 0.30 wt%, resulting in an increase of the complete austenitizing temperature $A_{e3}$ of the weld from 809 °C to 841 °C, thereby reducing the degree of austenitizing of the weld during the subsequent hot stamping process. Therefore, in the subsequent hot stamping process, the austenitizing degree of the weld of Comparative Example 1 was insufficient, which showed that the proportion of ferrite in the weld was high (6.3 wt%), which reduced the tensile strength of Comparative Example 1 from 1532MPa to 1510MPa and the elongation from 6.9% to 2.7%.

Similarly, the data of Example 2 and Comparative Example 2 also reflect the influence of the thickness of the base steel plate on the properties of the weld, in which the the proportion of ferrite observed in the microstructure of the weld of Comparative Example 2 is 8.7 wt%, the tensile strength is reduced to 1443MPa, and the elongation is reduced by about 75% compared with Example 2.

It can be seen that although the proportion of ferrite in the weld can be reduced by thinning the pre-coating layer to improve the performance of the weld, the reduction of proportion of ferrite actually depends on the reduction of aluminum content in the weld. Only the thinning of the pre-coating layer can not ensure the reduced aluminum content in the weld, but the synergistic effect of the thickness of the substrate plate and the pre-coating layer should be considered at the same time. In other words, not all plates with thin pre-coating can obtain good weld performance by direct laser tailor-welded.

Furthermore, the Mn content in the matrix of plate also has obvious influence on the austenitizing temperature $A_{e3}$ of the weld. For example, for Example 3 and Comparative Example 2, since the austenitizing temperature $A_{e3}$ of the weld of Comparative Example 2 is high, the weld can not be complete austenitizing during the hot stamping process, resulting in lower weld strength. In contrast, the tensile strength and elongation of the weld of Example 3 were significantly improved compared with that of Comparative Example 2 (for example, the elongation of Example 3 reached 6.5%, which was significantly higher than that of Comparative Example 2), and the proportion of ferrite in the weld was significantly reduced to only 0.9 wt%. This is because although example 3 and comparative example 2 have the same thickness of the base sheet and similar total thickness of the pre-coating layer, and the aluminum content of the weld seam is approximately the same (0.76 wt% and 0.75 wt%, respectively), the base sheet of example 3 has a high Mn content (up to 3.25 wt%), so that the austenitizing temperature $A_{e3}$ of the weld seam of example 3 is reduced to 811°C. Therefore, after hot stamping forming process, the proportion of ferrite in the finally obtained weld is greatly reduced, thereby significantly improving the mechanical properties of the hot stamping forming parts.

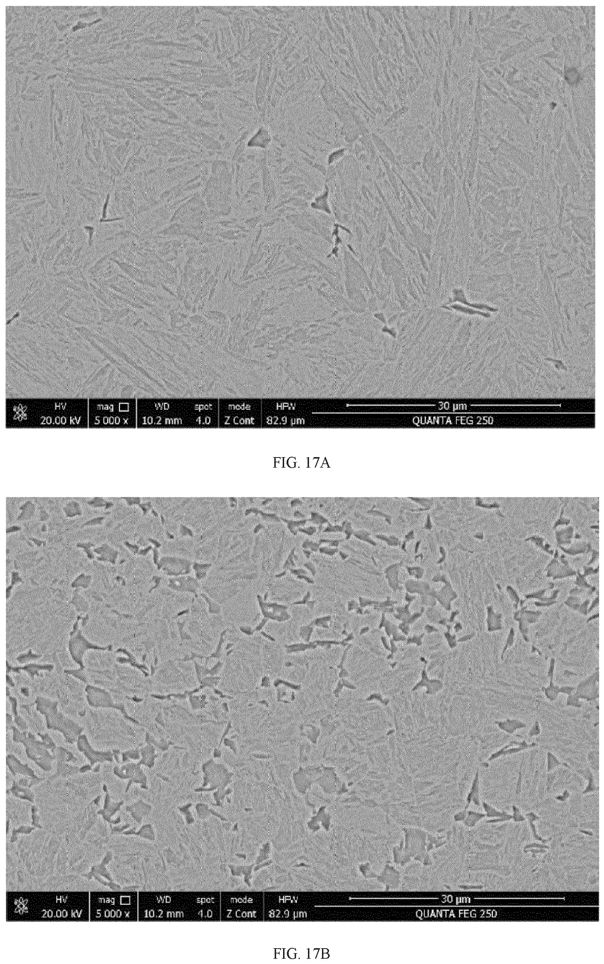

Similarly, the data of Example 4 and Comparative Example 3 likewise show the importance of a high Mn content for the improvement of weld properties. The high Mn content of example 4 causes the austenitizing temperature $A_{e3}$ (815°C) to be significantly lower than the austenitizing temperature $A_{e3}$ (854°C) of comparative example 3. Therefore, the austenitizing degree of the weld of Example 4 is increased relative to Comparative Example 3 during hot stamping, so that the proportion of ferrite observed in the microstructure of the weld ( Figs. 17A and 17B) is reduced from 9.2 wt% to 1.2 wt%, the tensile strength is increased from 1440MPa to 1518MPa, and the elongation is increased from 2.3% to 6.0%.

However, it is noted that high Mn content does not ensure the performance of welds. For example, Comparative Example 4 also had a higher Mn content, but its tensile strength and elongation at break were both low. This is because the total thickness of pre-coating layer in Comparative Example 4 is large, which leads to excessive Al content in weld. In this case, even if higher Mn content is added, it can not offset the increase of austenitizing temperature caused by too high Al content, so the austenitizing temperature $A_{e3}$ of the weld is still as high as 872°C, which makes the austenitizing degree of the weld relatively low after hot stamping. As a result, large amount of ferrite formed in the weld, which leads to insufficient weld strength.

Similarly, the Mn content should not be too low. Comparing the data of Example 1 and Example 5, it can be seen that they have similar pre-coating thickness, carbon content, aluminum content and thickness of the base plate, wherein the manganese content of the base steel plate in Example 5 is slightly lower, which is about 1.40 wt%. Although the manganese content of the base steel plate in Example 5 is not much different from that of the base steel plate in Example 1 (about 1.81 wt%), the proportion of ferrite in the weld of Example 5 (about 3.7%) after hot stamping is higher than that in the weld of Example 1 (about 1.0%). This is because the slightly lower Mn content did not effectively reduce the austenitizing temperature $A_{e3}$ of the weld of comparative example 5 (825°C, which significantly higher than the full austenitizing temperature $A_{e3}$ (809°C) of the weld of example 1). The higher austenitizing temperature $A_{e3}$ leads to the lower austenitizing degree of the weld during hot stamping forming, which leads to more residual ferrite after hot stamping forming and reduces the performance of the weld.

This also reflects the importance of controlling the austenitizing temperature of welds. The inventor requires that the austenitizing temperature $A_{e3}$ of the weld seam should not be higher than 820°C. The thickness of the base steel plate was 1.4 mm, the C content was 0.21 wt%, the Mn content was 1.70 wt%, the Al content was 0.016 wt%, and the one-side pre-coating thickness was 13.77μm refer to the data of Comparative Example 6. Although each parameter of Comparative Example 6 was within the limited range, there was about 4.2 wt% ferrite in the weld after hot stamping, and the elongation of the weld was only 2.7%. This is because the austenitizing temperature $A_{e3}$ of the weld seam calculated according to Equation 1 is about 831 °C, which is higher than the predetermined 820 °C. Therefore, in order to ensure the austenitizing degree of the weld during the subsequent hot stamping forming process the complete austenitizing temperature $A_{e3}$ of the weld will not be higher than 820°C.

In addition, the C content in the matrix of plate also has an effect on the austenitizing temperature $A_{e3}$ of the weld. Comparing Example 5 and Example 1, it can be found that both have similar steel plate substrate thickness, total pre-coating thickness and Mn content, but the C content of Example 5 (0.33 wt%) is higher than that of Example 1 (0.22 wt%). After hot stamping, the weld of Example 5 contained about 0.3% ferrite, resulting in a tensile strength of about 1923MPa and an elongation of 6.3%, which was superior to the weld properties of Comparative Example 1. This is because the C content of the weld in Example 5 is slightly higher than that of the weld in Example 1, so that the austenitizing temperature $A_{e3}$ of the weld in Example 5 is reduced to 789°C. Furthermore, the Example 5 could obtain the tensile strength of 1923MPa and elongation of 6.3% after hot stamping.

Finally, the influence of Al content in the matrix of plate on the austenitizing temperature of weld can not be ignored. For example, Comparative Example 7 and Example 5 had similar substrate thickness, total pre-coating thickness, C content, and Mn content, but the substrate of Comparative Example 7 had an Al content as high as 0.610 wt%. After hot stamping, the weld of Comparative Example 7 contained about 8.3% ferrite, resulting in a tensile strength of about 1841MPa and an elongation of only 2.3%, significantly lower than the weld properties of Example 5. According to the calculation, the complete austenitizing temperature $A_{e3}$ (857°C) of the weld of comparative example 7 is much higher than the austenitizing temperature Ae3 (789°C) of the weld of example 5. Furthermore, in the subsequent hot stamping process, the austenitization degree of comparative example 7 weld is reduced, affecting its final performance.

The preceding examples and comparative examples illustrate that controlling the austenitizing temperature $A_{e3}$ of the weld involves a synergistic effect of a number of factors, such as the total thickness of the pre-plated layer, the thickness of the base steel plate, the C content of the base steel plate, the Al content and the Mn content. If the synergistic effect of multiple factors is not considered, it is difficult to improve the weld performance even if multiple factors are within the corresponding prescribed range.

The inventors have found that the control of the synergistic effect of these factors can be achieved by controlling the composition of the weld seam. To make the austenitizing temperature $A_{e3}$ satisfies Equation 1 by reasonably limiting the relationship among the C content, Al content and Mn content of the weld seam. In this case, the weld obtained by laser tailor-welded pre-coated sheet can have improved performance without using other auxiliary means:

$$A_{e3}=898-30\times C_{\text{Mn-weld}}-231\times C_{\text{C-weld}}+58\times C_{\text{Al-weld}}^2+37\times C_{\text{Al-weld}}\leq 820;\quad(\text{Equation 1})$$

$$C_{\text{Mn-weld}}=(t_{0A}\times C_{\text{Mn-A}}+t_{0B}\times C_{\text{Mn-B}})\div(t_{0A}+t_{0B});\quad(\text{Equation 2})$$

$$C_{\text{C-weld}}=(t_{0A}\times C_{\text{C-A}}+t_{0B}\times C_{\text{C-B}})\div(t_{0A}+t_{0B});\quad(\text{Equation 3})$$

$$C_{\text{Al-weld}}=C_{\text{Al-weld-base}}+C_{\text{Al-weld-coat}};\quad(\text{Equation 4})$$

$$C_{\text{Al-weld-base}}=(t_{0A}\times C_{\text{Al-A}}+t_{0B}\times C_{\text{Al-B}})\div(t_{0A}+t_{0B});\quad(\text{Equation 5})$$

$$C_{\text{Al-weld-coat}}=[（t_{1A}+t_{1B}）\times0.7\times2.7]\div[（t_{0A}+t_{0B}）\times7.8+（t_{1A}+t_{1B}）\times0.7\times2.7）]\times100;$$

（Equation 6）

among them,

$C_{\text{Mn-weld}}$ is the content of Mn in the weld,
$C_{\text{C-weld}}$ is the content of C in the weld,
$C_{\text{Al-wel}}$ is the content of Al in the weld,
$C_{\text{Al-weld-base}}$ is the content of Al in the weld from the base plate,
$C_{\text{Al-weld-coat}}$ is the content of Al in the weld from the pre-coated layer.
$t_{0A}$ is the thickness of the first base steel plate;
$t_{0B}$ is the thickness of the second base steel plate;
$t_{1A}$ is the total thickness of the pre-coated layer on the first pre-coated steel plate;
$t_{1B}$ is the total thickness of the pre-coated layer on the second pre-coated steel plate.

Equation 1 is obtained by the inventor by performing a large amount of data calculation and statistics through a commercial phase change temperature calculation software in recognition of the synergistic effect of related factors. The details are as follows:
The composition of the alloy system is as follows: 0.08 wt% ~ 0.45 wt% C, 1.0 wt% ~ 4wt% Mn, 0.01 wt% ~1.3 wt% Al, 0.15 wt% Cr, 0.10 wt% Mo, 0.005 wt% Nb, 0.02 wt% Ni, 0.2 wt% Si, 0.01 wt% Ti, 0.002 wt% B and the rest Fe. Because the content of C, Mn and Al in the alloy system of this material needs to be adjusted, it is set as a variable within a certain range. Except C, Mn and Al, other alloying elements (referred to as "other alloying elements") are designed according to the fixed composition, and even a small deviation in production has little influence on the complete austenitizing temperature.

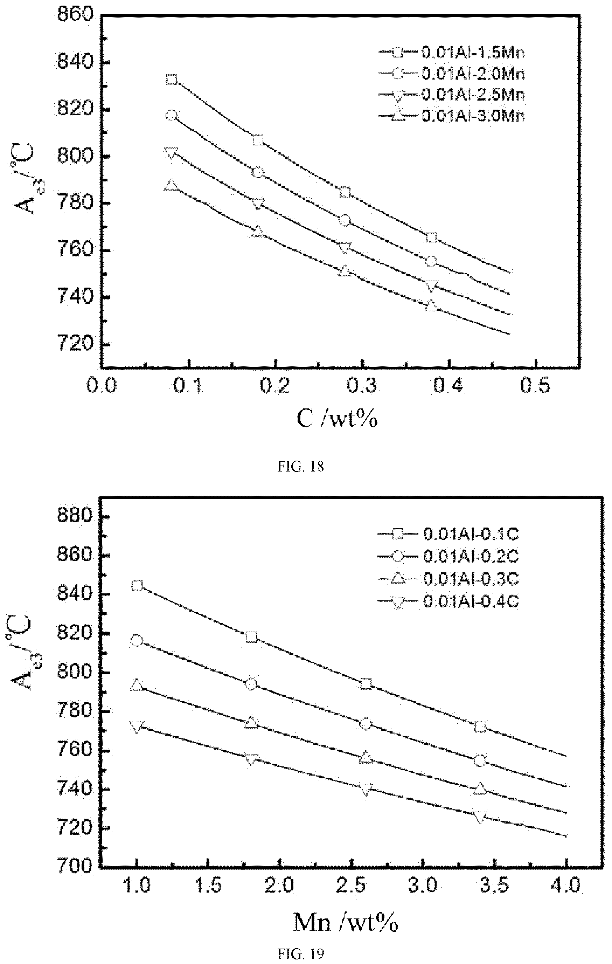

Determination of the influence factor of C element on $A_{e3}$ value. In the above alloy system, the $A_{e3}$ value in equilibrium state is calculated under the conditions of 1.5 wt% Mn, 2.0 wt% Mn, 2.5 wt% Mn and 3.0 wt% Mn with the Al content of 0.010 wt% and the C content in the range of 0.08 wt% to 0.45 wt% at intervals of 0.01 wt%, respectively. Other alloy compositions are kept unchanged. The obtained $A_{e3}$ value is plotted as a curve, as shown in Fig. 18. As can be seen from Fig. 18, with the increase of C content, the $A_{e3}$ value gradually decreases. It shows the same trendeven under different Mn contents. By fitting the curve, the influence factor of unit C content (per 1wt%) on $A_{e3}$ value is-23 1.

Determination of the influence factor of Mn element on $A_{e3}$ value. In the above alloy system, the $A_{e3}$ value in equilibrium state is calculated under the conditions of 0.1 wt% C, 0.2 wt% C, 0.3 wt% C and 0.4 wt% C, respectively. Other alloy compositions are kept unchanged. The calculated $A_{e3}$ value is plotted as a curve, as shown in Fig. 19, with the Al content being set at 0.010 wt% and the Mn content in the range of 1.0 wt% to 4.0 wt% at intervals of 0.1 wt%. As can be seen from Fig. 19, with the increase of Mn content, the $A_{e3}$ value gradually decreases. It shows the same trend even under different C contents. By fitting the curve, the influence factor of unit Mn content (per 1wt%) on $A_{e3}$ value is -30.

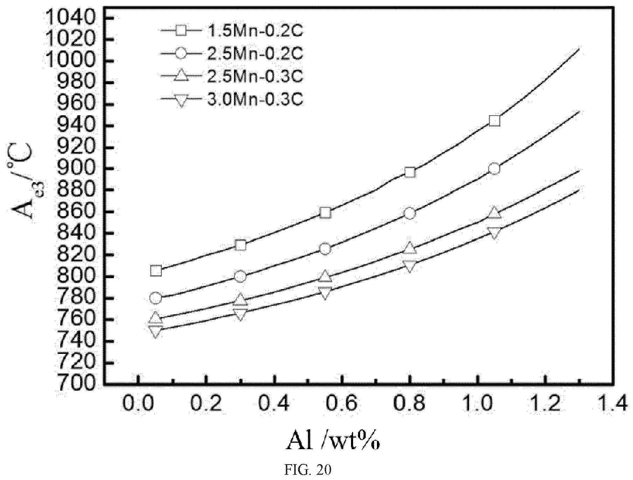

Determination of the influence factor of Al element on $A_{e3}$ value. In the above alloy system, the $A_{e3}$ value in equilibrium state is calculated with 1.5wt% Mn-0. 2wt% C, 2.5 wt% Mn-0. 2wt% C, 2.5 wt% Mn-0. 3wt% C and 3.0 wt% Mn-0. 3wt% C respectively, and the Al content is in the range of 0wt% to 1.3 wt% at intervals of 0.1 wt%. Other alloy compositions remain unchanged. The obtained $A_{e3}$ value is plotted as a curve, as shown in Fig. 20. As can be seen from Fig. 20, with the increase of Al content, the $A_{e3}$ value gradually increases. It shows the same trend even under different C and Mn contents. By fitting the curve, the influence of unit Al content (per 1wt%) on $A_{e3}$ value can be expressed by the relation $58Al^2 + 37Al$.

The inventor set 0.08wt% C-1.0wt% Mn-0wt% Al and other alloy composition as the initial alloy composition, and calculated the $A_{e3}$ value to be 850. On this basis, the influence factors of C, Mn and Al on $A_{e3}$ value are combined to get $A_{e3}=850-231 (C-0.08)-30 (Mn-1.0) +58Al^2 + 37Al$, and $A_{e3}=898-231C-30Mn +58Al^2 + 37Al$ is obtained by finishing the equation. Further, the Equation 1: $A_{e3}=898-30 \times C_{\text{Mn-weld}}-231 \times C_{\text{C-weld}}+58 \times C_{\text{Al-weld}}^2+37 \times C_{\text{Al-weld}}$ can be obtained by incorporating the agreed weld composition expression method;
Based on the derivation process of Equation 1, the $A_{e3}$ values can be calculated by Equation 1 for the changes of C, Mn and Al compositions in the above-mentioned alloy composition range.

According to Equations 1 and 6, the Al content and $A_{e3}$ values of the welds of each embodiment and comparative example were calculated, respectively, and are listed in Table 3.

For examples 1 to 6, according to equation 1, after laser tailor-welding, the calculated $A_{e3}$ value is in the range of 789 ~ 817 °C, which is far lower than the heat preservation temperature in the subsequent hot stamping process, thus improving the austenitizing degree of the weld in the subsequent hot stamping process. This is verified by the ferrite content in the weld after hot stamping. The low ferrite content improves the weld and thus the performance of the hot stamped member.

In contrast, for comparison examples 1 to 7, the calculated $A_{e3}$ value after laser tailor-welding can be obtained according to equation 1 in the range of about 825 ~ 872 °C. In contrast, the austenitizing degree of the weld decreases in the subsequent hot stamping process, which is verified by the increased the proportion of ferrite in the weld after hot stamping. For example, the proportion of ferrite of Comparative Example 4 is as high as 10%, resulting in a significant degradation of the properties of the welded seam and thus the hot stamping formed member.

According to the obtained equation, the corresponding pre-coating structure can be selected when the content and thickness of C, Mn and Al of the substrate plate are known, or the appropriate composition and thickness of the foundation steel plate can be selected when the desired pre-coating structure is known, so that the strength and toughness of the weld obtained by laser tailor-welding have improved performance, but other means are not needed in the laser tailor-welding process.

For example, for the thinner base steel plate of Example 3, the thickness of the one-side pre-coating layer cannot exceed 13.5 $\mu$m in order to make $A_{e3} \leq 820°C$. The actual thickness of one-side pre-coating layer is 12.36 $\mu$m in this range, so the weld obtained by direct laser tailor-welded can obtain excellent performance after hot stamping. In contrast, in order to make $A_{e3} \leq 820°C$, the thickness of one-side pre-coating layer should not exceed 5.6 $\mu$m, 6.5 $\mu$m, 9.2 $\mu$m, 22.5 $\mu$m, 6.5 $\mu$m, 10 $\mu$m and 2.1 $\mu$m respectively for comparison 1 to comparison 7. Comparative Examples 1 to 7 The thickness of one-side pre-coating layer actually used exceeds the corresponding range. Thus, under the condition of direct laser tailor-welded without auxiliary means, the obtained weld has excessive ferrite after hot stamping, which deteriorates the performance of the weld. This demonstrates, on the one hand, that the use of only thin pre-coating (Comparative Examples 1 to 3 and Comparative Examples 5 to 7) does not ensure excellent performance of the weld, and on the other hand, that the synergistic effect of multiple factors needs to be considered, because one or more factors within a set range may not ensure that the composition of the weld meets a predetermined relationship, thus failing to obtain the expected performance.

The above embodiments and experimental data are intended to be illustrative of the present invention, and it will be apparent to those skilled in the art that the present invention is not limited to these embodiments and that various changes may be made without departing from the scope of the invention.

## Claims

1. A laser tailor-welded pre-coated steel plate comprising a first pre-coated steel plate, a second pre-coated steel plate and a weld seam between the edges of the two,

   the first pre-plated steel plate comprises a first base steel plate and a one-sided pre-coated layer of aluminum or aluminum alloy on the upper and lower surfaces of the first base steel plate, wherein the carbon content $C_{C-A}$ of the first base steel plate is in the range of 0.08 wt% to 0.45 wt%, the manganese content $C_{Mn-A}$ is in the range of 1.70 wt% to 3.50 wt%, the aluminum content $C_{Al-A}$ is in the range of 0.010 wt% to 1.000 wt%, and the thickness $t_{0A}$ is 0.7 mm to 3.0 mm;

   the second pre-coated steel plate comprises a second base steel plate and a pre-coated layer of aluminum or aluminum alloy on the upper and lower surfaces of the second base steel plate, wherein the carbon content $C_{C-B}$ of the second base steel plate is in the range of 0.08 wt% to 0.45 wt%, the manganese content $C_{Mn-B}$ is in the range of 1.70 wt% to 3.50 wt%, the aluminum content $C_{Al-B}$ is in the range of 0.010 wt% to 1.000 wt%, and the thickness $t_{0B}$ is 0.7 mm to 3.0 mm;

   the one-sided pre-coating layer on the upper and lower surfaces of the first pre-coated steel plate and the second pre-coated steel plate comprises: an intermetallic compound layer proximate to the first or second base steel plate; and an Al alloy layer outside the intermetallic compound layer, the thickness of the Al alloy layer being not less than 40% of the thickness of the one-sided pre-coated layer and the thickness of the one-sided pre-coated layer being 8 $\mu$m to 18 $\mu$m, such that the total thickness $t_{1A}$ of the pre-coated layer on the first pre-coated steel plate is 16 $\mu$m to 36 $\mu$m and the total thickness $t_{1B}$ of the pre-coated layer on the second pre-coated steel plate is 16 $\mu$m to 36 $\mu$m;

   wherein the composition of the weld seam in weight percent is such that the full austenitizing temperature $A_{e3}$ of the weld seam in equilibrium state satisfies:

$$A_{e3}=898-30\times C_{Mn-weld}-231\times C_{C-weld}+58\times C_{Al-weld}^2+37\times C_{Al-weld}\leq820;$$

$$C_{Mn-weld}=(t_{0A}\times C_{Mn-A}+t_{0B}\times C_{Mn-B})\div(t_{0A}+t_{0B});$$

$$C_{C\text{-weld}} = (t_{0A} \times C_{C\text{-A}} + t_{0B} \times C_{C\text{-B}}) \div (t_{0A} + t_{0B});$$

$$C_{Al\text{-weld}} = C_{Al\text{-weld-base}} + C_{Al\text{-weld-coat}};$$

$$C_{Al\text{-weld-base}} = (t_{0A} \times C_{Al\text{-A}} + t_{0B} \times C_{Al\text{-B}}) \div (t_{0A} + t_{0B});$$

$$C_{Al\text{-weld-coat}} = [(t_{1A} + t_{1B}) \times 0.7 \times 2.7] \div [(t_{0A} + t_{0B}) \times 7.8 + (t_{1A} + t_{1B}) \times 0.7 \times 2.7)] \times 100;$$

among them,

$C_{Mn\text{-weld}}$ is the content of Mn in the weld,
$C_{C\text{-weld}}$ is the content of C in the weld,
$C_{Al\text{-wel}}$ is the content of Al in the weld,
$C_{Al\text{-weld-base}}$ is the content of Al in the weld from the base plate,
$C_{Al\text{-weld-coat}}$ is the content of Al in the weld from the pre-coated layer.

2. The laser tailor-welded pre-coated steel plate according to claim 1, wherein the $C_{C\text{-A}}$ and $C_{C\text{-B}}$ are in the range of 0.18 wt% to 0.45 wt%; $C_{Al\text{-A}}$ and $C_{Al\text{-B}}$ are in the range of 0.010 wt% ~ 0.700 wt%.

3. The laser tailor-welded precoated steel sheet according to claim 1, wherein $C_{Al\text{-A}}$ and $C_{Al\text{-B}}$ are in the range of 0.010 wt% to 0.100 wt%.

4. The laser tailor-welded precoated steel sheet according to any one of claims 1 to 3, wherein $C_{Al\text{-weld}} \leq 1.2$wt%.

5. The laser tailor-welded pre-coated steel plate according to claim 4, wherein $C_{Al\text{-weld}} \leq 1.0$wt%.

6. The laser tailor-welded precoated steel sheet according to any one of claims 1 to 3, wherein $A_{e3} \leq 800$.

7. A hot stamping formed member made of the laser tailor-welded precoated steel sheet according to any one of claims 1 to 6.

8. The hot stamped member according to claim 7, wherein the ferrite in the weld after hot stamping is less than 3% by volume.

9. The hot stamped member of claim 7, wherein the hot stamped member has an elongation of not less than 4% and a tensile strength of not less than 90% of the lower of both the first and second precoated steel plates.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17A

FIG. 17B

FIG. 18

FIG. 19

FIG. 20

## INTERNATIONAL SEARCH REPORT

| International application No. |
|---|
| **PCT/CN2021/081205** |

**A.    CLASSIFICATION OF SUBJECT MATTER**

B32B 15/04(2006.01)i;   B23K 31/12(2006.01)i;   C22C 38/06(2006.01)i

According to International Patent Classification (IPC) or to both national classification and IPC

**B.    FIELDS SEARCHED**

Minimum documentation searched (classification system followed by classification symbols)

B32B,B23K, C22C

Documentation searched other than minimum documentation to the extent that such documents are included in the fields searched

Electronic data base consulted during the international search (name of data base and, where practicable, search terms used)

CNABS: VEN, CNKI; 铝, 激光, 预镀层, 焊, 奥氏体, steel, 铝, al, 钢板, weld+, austenite, aluminum, laser

**C.    DOCUMENTS CONSIDERED TO BE RELEVANT**

| Category* | Citation of document, with indication, where appropriate, of the relevant passages | Relevant to claim No. |
|---|---|---|
| PX | CN 112455024 A (YUCAITANG SUZHOU MATERIAL TECHNOLOGY CO., LTD.) 09 March 2021 (2021-03-09)<br>claims 1-9 | 1-9 |
| A | CN 111360406 A (SHANGHAI INSTITUTE OF OPTICS AND FINE MECHANICS, CHINESE ACADEMY OF SCIENCES) 03 July 2020 (2020-07-03)<br>entire document | 1-9 |
| A | CN 111778467 A (YUCAITANG (SUZHOU) MATERIAL TECHNOLOGY CO., LTD.) 16 October 2020 (2020-10-16)<br>entire document | 1-9 |
| A | CN 111215751 A (BAOSHAN IRON & STEEL CO., LTD.) 02 June 2020 (2020-06-02)<br>entire document | 1-9 |
| A | EP 2737971 A1 (HYUNDAI HYSCO et al.) 04 June 2014 (2014-06-04)<br>entire document | 1-9 |

☐ Further documents are listed in the continuation of Box C.        ☑ See patent family annex.

| * Special categories of cited documents: | |
|---|---|
| "A"   document defining the general state of the art which is not considered to be of particular relevance | "T"   later document published after the international filing date or priority date and not in conflict with the application but cited to understand the principle or theory underlying the invention |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **13 October 2021** | **22 October 2021** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2021/081205**

| Patent document cited in search report | | | Publication date (day/month/year) | Patent family member(s) | | | Publication date (day/month/year) |
|---|---|---|---|---|---|---|---|
| CN | 112455024 | A | 09 March 2021 | CN | 112455024 | B | 27 April 2021 |
| CN | 111360406 | A | 03 July 2020 | | None | | |
| CN | 111778467 | A | 16 October 2020 | CN | 111778467 | B | 24 November 2020 |
| CN | 111215751 | A | 02 June 2020 | WO | 2020200110 | A1 | 08 October 2020 |
| | | | | EP | 3815837 | A1 | 05 May 2021 |
| EP | 2737971 | A1 | 04 June 2014 | EP | 3552754 | A1 | 16 October 2019 |
| | | | | CN | 104023899 | A | 03 September 2014 |
| | | | | BR | 112013028391 | B1 | 24 April 2019 |
| | | | | US | 9884468 | B2 | 06 February 2018 |
| | | | | CN | 104023899 | B | 31 August 2016 |
| | | | | KR | 101448473 | B1 | 10 October 2014 |
| | | | | WO | 2014088170 | A1 | 12 June 2014 |
| | | | | KR | 20140071581 | A | 12 June 2014 |
| | | | | US | 9381720 | B2 | 05 July 2016 |
| | | | | BR | 112013028391 | A2 | 24 October 2017 |
| | | | | US | 2015165726 | A1 | 18 June 2015 |
| | | | | US | 2014154521 | A1 | 05 June 2014 |
| | | | | JP | 2015510453 | A | 09 April 2015 |
| | | | | JP | 5873934 | B2 | 01 March 2016 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101426612 A
- CN 103917329 A
- CN 101104225 A
- CN 106687248 A